# EUROPÄISCHE PATENTSCHRIFT

(11) **EP 1 600 283 B1**
(45) Veröffentlichungstag und Bekanntmachung des Hinweises auf die Patenterteilung: **22.07.2009**
(21) Anmeldenummer: 05010562.6
(22) Anmeldetag: 14.05.2005
(51) Int. Cl.: B30B 1/32

(54) **Stanzpresse, insbesondere zur Ablängung und Endenbearbeitung von Flachstabmaterial für Fensterbeschläge**
Cutting press, in particular for trimming and end-finishing strips of window fittings
Presse de découpage, en particulier pour raccourcir et finir l'extrémité de baguettes de ferrurerie de fenêtre

(30) Priorität: 29.05.2004 DE 202004008541 U
(43) Veröffentlichungstag der Anmeldung: 30.11.2005
(73) Patentinhaber: Reiplinger, Roswitha, 54669 Bollendorf (DE)
(72) Erfinder: Reiplinger, Günter, 54669 Bollendorf (DE)
(74) Vertreter: Pürckhauer, Rolf

(56) Entgegenhaltungen:
- DE-A1- 10 200 137
- DE-A1- 19 738 251
- FR-A- 2 233 111
- JP-A- 59 104 223

## Beschreibung

Die Erfindung betrifft Stanzpressen, insbesondere zur Ablängung und Endenbearbeitung von Flachstabmaterial für Fensterbeschläge, mit einem druckmittelbetätigten Antriebszylinder für den Hubantrieb eines Werkzeughalters mit einem eingebauten Stanzwerkzeug, das mit einer Matrize zusammenwirkt, wobei die Kolbenstange des doppeltwirkenden Arbeitskolbens des Antriebszylinders als Werkzeughalter für den Einbau eines Stanzwerkzeugs ausgebildet ist und die Kolbenstange beim Arbeitshub und beim Rückhub des Arbeitskolbens durch eine Zylinderführung des Mantels des Antriebszylinders, den Arbeitskolben des Antriebszylinders sowie einen an der der Kolbenstange abgewandten Fläche des Arbeitskolbens angeordneten Führungsbolzen, der im Boden des Antriebszylinders verschiebbar gelagert ist, geführt ist. Stanzpressen dieser Art sind aus der FR 2 233 111 A1 bekannt.

Eine aus der DE 102 00 137 A1 bekannte Stanzpresse weist einen oberen und einen unteren durch eine Zwischenmatrize getrennten Kanal zum Einlegen eines oberen und eines unteren Flachstabes eines Fensterbeschlages auf, die an einem Ende miteinander verbunden sind, ferner eine Bodenmatrize, einen Lochstempel mit einer umlaufenden Schneidkante und einen Ablängstempel mit einer Schneidkante zum Lochen und Ablängen des einen Endes des oberen Flachstabes auf, wobei die Schneidkanten des Lochstempels und des Ablängstempels mit entsprechenden Gegenschneidkanten der ZwisChenmatrize zusammenwirken. Lochstempel und Ablängstempel sind in einen Werkzeughalter integriert, der an der Kolbenstange des Arbeitskolbens des Antriebszylinders der Stanzpresse befestigt ist. Die Stanzpresse ist mit einer Stempelbrücke ausgestattet, die an zwei Haltestangen befestigt ist, die an dem an der Kolbenstange des Arbeitskolbens des Antriebszylinders der Stanzpresse angebrachten Werkzeughalter für den Lochstempel und den Ablängstempel befestigt sind. Die Stempelbrücke bildet mit den Haltestangen ein Fenster zum Durchschieben des oberen Flachstabes beim Einlegen desselben in den oberen Kanal. Die Stempelbrücke weist eine Schneidkante zum Ablängen des unteren Flachstabes auf, die mit einer entsprechenden Gegenschneidkante der Bodenmatrize beim Ablängvorgang zusammenwirkt. Beim Arbeitshub der Stanzpresse wird die Stempelbrücke durch die Zwischenmatrize und die Bodenmatrize geführt. Der Werkzeughalter mit dem Lochstempel, dem Ablängstempel und der Stempelbrücke ist als Folgeschnittwerkzeug mit einer optimierten Schnittkraftausnutzung ausgelegt.

Eine weitere aus der DE 197 38 251 A1 bekannte Stanzpresse zum unterschiedlichen Ablängen der freien Enden von zwei miteinander verbundenen Flachstäben und Lochen oder Prägen des freien Endes eines Flachstabes ist mit zwei sich gegenüberliegenden und achsversetzt zueinander angeordneten, mit je einer Hydropneumatik-Zylinder-Druckübersetzer-Kombination ausgerüsteten Stanzeinheiten ausgestattet, wobei die eine Stanzeinheit einen Ablängstempel und einen Loch- oder Prägestempel und die andere Stanzeinheit einen Ablängstempel aufweist und der Ablängstempel sowie der Loch- oder Prägestempel der einen Stanzeinheit an der Kolbenstange des Arbeitskolbens des zugehörigen Antriebszylinders angebracht ist.

Aus der JP 59 104223 A geht eine Stanzpresse hervor, deren mit einer Matrize zusammenwirkender Pressenstempel mit fünf Lochstempeln zum Bearbeiten eines Werkstücks bestückt ist, wobei drei Lochstempel eine größere Länge aufweisen als die beiden anderen Lochstempel, derart, dass mit einem Pressenhub zuerst drei und anschließend zwei Löcher in das Werkstück gestanzt werden. Diese Pressenkonstruktion ermöglicht das Folgestanzen von fünf Löchern in ein Werkstück in einem Hub mit einer Presskraft, die für das Stanzen von drei Löchern bemessen ist. Auf diese Weise kann Antriebsenergie für die Stanzpresse eingespart werden, so dass die Produktionskosten gesenkt werden können.

Der Erfindung liegt die Aufgabe zugrunde, die gattungsgemäße Stanzpresse im Hinblick auf eine höhere Betriebssicherheit durch eine Entlastung des Arbeitskolbens des Antriebszylinders der Presse von den Schnittkräften, eine vereinfachte Steuerung des Antriebszylinders, eine größere Gestaltungsmöglichkeit des Lochbeziehungsweise Schnittbildes durch den Einbau entsprechender Stanzwerkzeuge, eine kompakte Konstruktion des Antriebszylinders und eine damit verbundene Verringerung der Betriebskosten durch Einsparung von Druckmedium für den Betrieb des Antriebszylinders sowie der Herstellungskosten, eine Optimierung der Schneidkantengeometrie der Stanzwerkzeuge zur Verringerung der Schnittkräfte, eine Erhöhung der Standzeiten und der Verminderung einer Verletzungsgefahr durch Abscheren des Abfallmaterials beim Stanzvorgang, eine gute Zugänglichkeit und einen damit verbundenen einfachen Austausch der Stanzwerkzeuge sowie eine Verringerung der Lagerhaltungskosten durch die Ausbildung der Stanzwerkzeuge sowie der zugehörigen Matrizen als Wechselwerkzeuge weiterzuentwickeln.

Diese Aufgabe ist erfindungsgemäß gelöst durch eine Stanzpresse mit den Merkmalen des Patentanspruchs 1.

Die Unteransprüche beinhalten vorteilhafte und zweckmäßige Weiterbildungen der Stanzpresse.

Die erfindungsgemäße Stanzpresse zeichnet sich durch folgende Vorteile aus:

Durch die Auslegung der durch das Druckmedium beaufschlagten Ringfläche des Arbeitskolbens des Antriebszylinders der Presse zur Erzeugung der Rückstellkraft beim Rückhub des Arbeitskolbens nach einem Stanzarbeitshub entsprechend der erforderlichen Rückstellkraft kann die Querschnittsfläche der Kolbenstange vergrößert werden, so dass die Kolbenstange als Werkzeughalter für den Einbau von gleichen und verschiedenen Stanzwerkzeugen entsprechend dem jeweils gewünschten Loch- bzw. Stanzbild insbesondere bei der Ablängung und Endenbearbeitung von Flachstabmaterial für Fensterbeschläge genutzt werden kann und eine kompakte Bauweise der Presse erreicht wird. Ferner werden durch die entsprechend der erforderlichen Rückstellkraft für den Arbeitskolben des Antriebszylinders optimal ausgelegte, druckbeaufschlagte Ringfläche des Arbeitskolbens die Kosten für den Betrieb des Antriebszylinders durch die Einsparung von Druckmedium gesenkt. Durch eine Führung der Kolbenstange des Arbeitskolbens des Antriebszylinders beim Arbeitshub und beim Rückhub durch eine Zylinderführung des Mantels des Arbeitszylinders, den Arbeitskolben des Antriebszylinders sowie einen an der der Kolbenstange abgewandten Seite des Arbeitskolbens angeordneten Führungsbolzen, der im Boden des Antriebszylinders eingreift und geführt wird, wird der Arbeitskolben von den für den Stanzvorgang erforderlichen außermittigen Schnittkräften entlastet, so dass die Führungslänge des Arbeitskolbens verringert und dadurch eine weitere Verkleinerung der Baulänge des Antriebskolbens und der gesamten Stanzpresse erreicht wird und durch die Entlastung des Arbeitskolbens von durch die Schnittkräfte bewirkten Querkräften die Betriebssicherheit der Stanzpresse erhöht wird. Die kompakte Bauweise der Stanzpresse führt zu einer Verringerung der Herstellungskosten. Eine Optimierung der Schneidkanten der Stanzwerkzeuge hinsichtlich des jeweiligen Schnittkraftbedarfs ermöglicht eine Verringerung der Schnittkräfte, eine Erhöhung der Standzeiten der Stanzwerkzeuge und eine Verminderung einer Verletzungsgefahr durch abscherendes Abfallmaterial beim Stanzvorgang. Ferner zeichnet sich die Stanzpresse durch eine vereinfachte Steuerung des Antriebszylinders, eine gute Zugänglichkeit und einen damit verbundenen einfachen Austausch der Stanzwerkzeuge sowie eine Verringerung der Lagerhaltungskosten durch die Ausbildung der Stanzwerkzeuge und der zugehörigen Matrizen als Wechselwerkzeuge aus.

Stanzpresse sind nachfolgend anhand schematischer Zeichnungsfiguren erläutert, die folgendes darstellen:
- Fig. 1: eine Längsschnittdarstellung einer ersten Ausführungsform einer Stanzpresse,
- Fig. 2: eine Längsschnittdarstellung eines 3/2-Wegeventils zur Steuerung des Antriebszylinders der Stanzpresse, die
- Fign. 3 bis 5: drei verschiedene Antriebe der Stanzpresse,
- Fig. 6: eine Längsschnittdarstellung einer erfindungsgemäßen Ausführungsform einer Stanzpresse, die
- Fign. 7und 8: Seitenansichten von zwei Ablängstempeln für einfaches und doppellagiges Flachstabmaterial,
- Fig. 9: die Seitenansicht eines Ablängstempels mit einer trapezförmigen Schneidkantenkontur, die
- Fign. 10a und 10 b: Seitenansicht und Draufsicht eines Lochstempels, die
- Fign. 11a und 11b: Draufsicht und Querschnitt einer Zwischenmatrize nach Linie XIb-XIb der Fig. 11a, die
- Fign. 12a und 12b: Draufsicht und Seitenansicht einer Stempelbrücke,
- Fig. 13: Draufsicht eines Matrizenstempels,
- Fig. 14: eine Längsschnittdarstellung einer Stanzpresse zum Ablängen von Flachstabmaterial,
- Fig. 15: eine Längsschnittdarstellung einer Stanzpresse zum Lochen von Flachstabmaterial,
- Fig. 16: eine perspektivische Darstellung einer Stanzpresse mit Schutzgehäuse und Messschieber,
- Fig. 17: eine Draufsicht eines Tabellenschiebers für eine Stanzpresse und
- Fig. 18: einen Querschnitt nach Linie XVIII-XVIII der Fig. 17.

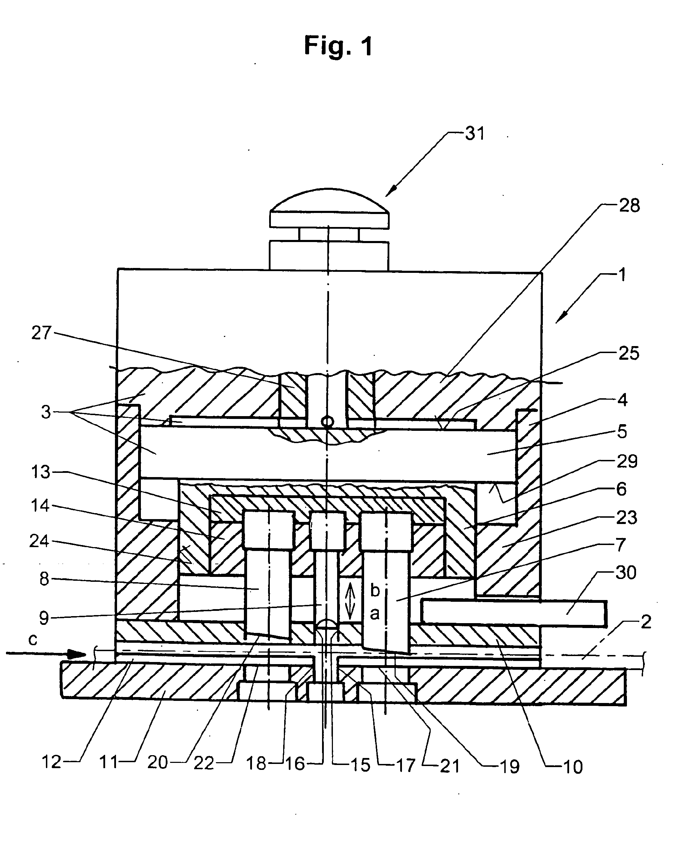

Hauptbauteile der Stanzpresse 1 nach Fig. 1 zur Ablängung und Endenbearbeitung von Flachstabmaterial 2 für Fensterbeschläge sind ein pneumatischer Antriebszylinder 3 mit einem Zylindermantel 4, einem doppeltwirkenden, als Flachkolben ausgebildeten Arbeitskolben 5 und einer an diesem angebrachten Kolbenstange 6, die als Werkzeughalter für den Einbau von zwei Lochstempeln 7, 8 mit unterschiedlicher Länge und eines Ablängstempels 9 ausgebildet ist, eine Führungsplatte 10 für die drei Stanzwerkzeuge 7-9 sowie eine Matrize 11, die mit der Führungsplatte 10 einen Kanal 12 zum Einlegen eines zu bearbeitenden Flachstabes 2 bildet. Die Stanzwerkzeuge 7-9 sind mittels einer Lagerplatte 13 und einer Spannplatte 14 in der Kolbenstange 6 des Arbeitskolben 5 fest eingebaut. Der Ablängstempel 9 besitzt zwei Schneidkanten 15, 16, die mit zwei entsprechenden Gegenschneidkanten 17,18 der Matrize 11 zusammenwirken. Die Lochstempel 7,8 weisen jeweils eine umlaufende, abgeschrägte Schneidkante 19, 20 auf, die mit entsprechenden umlaufenden Gegenschneidkanten 21, 22 der Matrize 11 zusammenwirken.

Die Kolbenstange 6 des doppeltwirkenden Arbeitskolbens 5 mit den drei eingebauten Stanzwerkzeugen 7-9 ist beim Arbeitshub a und beim Rückhub b des Arbeitskolbens 5 des Antriebszylinders 3 durch eine Zylinderführung 24 eines am Mantel 4 des Antriebszylinders einteilig angeformten oder angeschweißten Ringflansches 23, den Arbeitskolben 5 des Antriebszylinders 3 sowie einen an der der Kolbenstange 6 abgewandten Fläche 25 des Arbeitskolbens 5 angeordneten Führungsbolzen 27, der in den Boden 28 des Antriebszylinders 3 eingreift, geführt. Die durch ein Druckmedium wie Druckluft zu Erzeugung der Rückstellkraft beaufschlagte Ringfläche 29 des Arbeitskolbens 5 des Antriebszylinders 3 beim Rückhub b des Arbeitskolbens 5 mit der Kolbenstange 6 ist entsprechend der erforderlichen minimalen Rückstellkraft ausgelegt.

Die Stanzpresse 1 ist mit einem manuell oder motorisch betätigten Anschlag 30 für die Kolbenstange 6 des Arbeitskolbens 5 zur Steuerung der Länge des Stanzhubes des Arbeitskolbens 5 und dessen mit den drei Stanzwerkzeugen 7-9 bestückten Kolbenstange 6 zum Ablängen von und Stanzen unterschiedlicher Lochbilder bzw. Stanzbilder in einem Folgeschnitt in das in den Kanal 12 eingelegte Flachstabmaterial 2 ausgestattet, wobei die in Einlegerichtung c des Flachstabmaterials 2 in Reihe hintereinander angeordneten Stanzwerkzeuge 7-9 unterschiedliche Längen aufweisen.

Der längere Lochstempel 7 stanzt bei eingeschobenem Anschlag 30 nur ein Loch. Wird der Anschlag 30 aus der Stanzpresse herausgezogen, wird das komplette Lochbild in einem Folgeschnitt derart in das Flachstabmaterial 2 gestanzt, das zuerst ein Loch mit dem längeren Lochstempel 7 und anschließend ein Loch mit dem kürzeren Lochstempel 8 gestanzt wird und schließlich das Stabmaterial 2 mit dem Ablängstempel 9 getrennt wird. Auf diese Weise wird der Schnittkraftbedarf wesentlich reduziert.

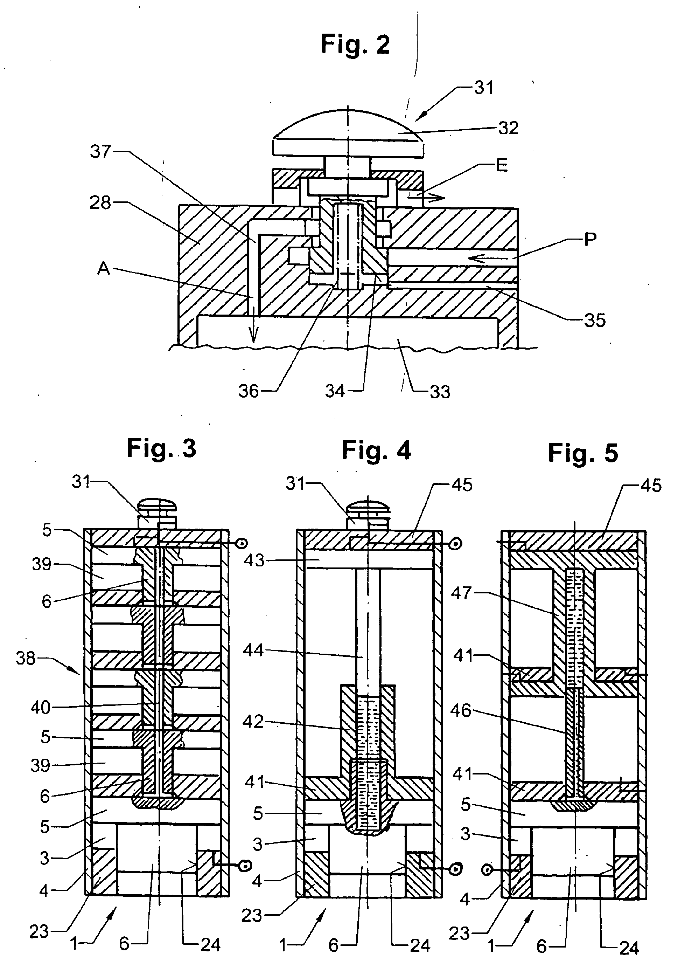

Das in den Boden 28 des Antriebszylinders 3 der Stanzpresse 1 bedienungsfreundlich eingebaute 3/2 Wege-Steuerventil 31 gemäß Fig. 2 ist in der Ruhestellung derart geschlossen, dass der Eingang P gegenüber dem Ausgang A geschlossen ist und die Entlüftungsseite E zum Ausgang A freien Durchgang hat. Beim Betätigen des Schaltknopfes 32 wird die Entlüftungsseite E geschlossen und der Zylinderraum 33 des Antriebszylinders 3 über den Ausgang A mit dem Eingang P verbunden. Das Ventil 31 ist druckkraftneutral derart ausgelegt, dass die Fläche 34 über den Kanal 35 mit der Atmosphäre verbunden ist und die Zuhaltekraft nur von der Schließfeder 36 aufgebracht wird. Auf diese Weise bleiben die Betätigungskräfte für das Steuerventil 31 unabhängig vom Druck und den Ventilnennweiten konstant. Die Arbeitsleitung 37 liegt im Boden 28 des Antriebszylinders 3 und es ist lediglich ein P-Eingang erforderlich.

Der Reihenzylinder 38 nach Fig. 3 zum Antrieb der Stanzpresse 1 besteht im wesentlichen aus dem Antriebszylinder 3 mit dem Arbeitskolben 5 und dessen durch die Zylinderführung 24 des Ringflansches 23 des Zylindermantels 4 geführten Kolbenstange 6, einer der erforderlichen Schnittkraft entsprechenden Anzahl von Zylinder-Kolbeneinheiten 39, einem Steuerventil 31 und einem inneren Luftführungskanal 40, der zentral durch die Kolben 5 und deren Kolbenstangen 6 geführt ist.

Der in Fig. 4 dargestellte Antrieb für die Stanzpresse 1 besteht aus einem Antriebszylinder 3 mit Druckübersetzer-Kombination. Der Antrieb umfasst den Antriebszylinder 3 mit dem Arbeitskolben 5 und dessen durch die Zylinderführung 24 des Ringflansches 23 des Zylindermantels 4 geführten Kolbenstange 6, einen Zwischenboden 41 mit einem Druckzylinder 42, einen Kolben 43 mit Übersetzungskolben 44 und ein in einen oberen Boden 45 integriertes 3/2 Wege-Steuerventil 31.

Der Antrieb gemäß Fig. 5 für eine Stanzpresse 1 ist mit einem Antriebzylinder 3 mit Tandem-Druckübersetzer ausgerüstet. Der Antrieb umfasst den Antriebzylinder 3 mit dem Arbeitskolben 5 und dessen durch die Zylinderführung 24 des Ringflansches 23 des Zylindermantels 4 geführten Kolbenstange 6, einen Zwischenboden 41, einen Hohlplunger 46, einen Doppelkolben mit Druckzylinder 47, einen weiteren Zwischenboden 41 und einen oberen Boden 45.

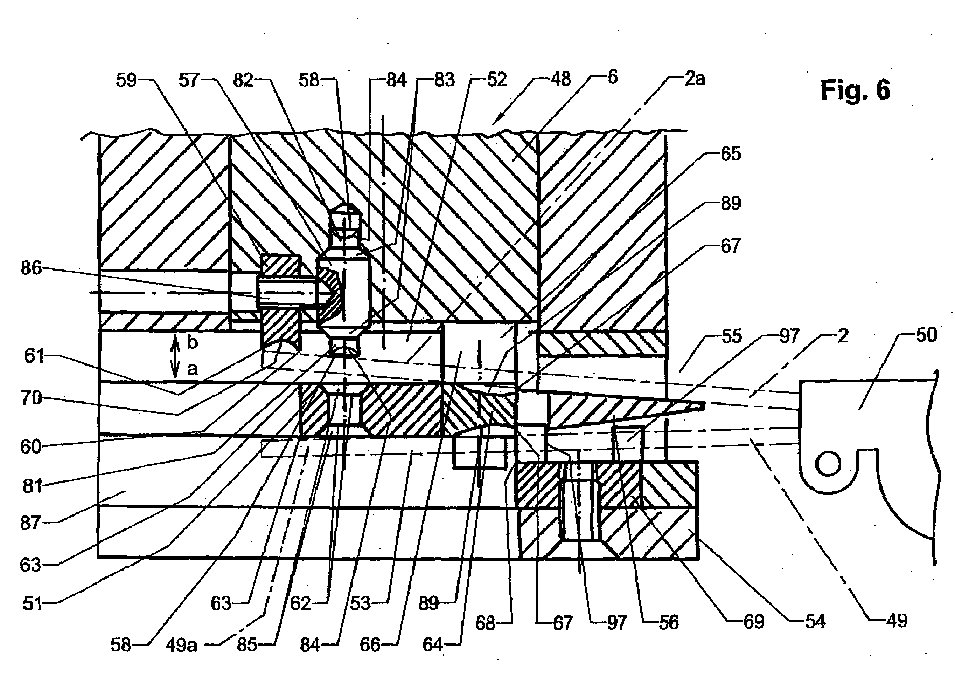

Die Stanzpresse 48 nach Fig. 6 ist zum Ablängen und zum Bearbeiten der freien Enden eines einfachen Flachstabes 2 und eines Doppelflachstabes 49 eines die anderen Enden der Stäbe miteinander verbindenden Drehkippbeschlages 50 für Fenster bestimmt.

Die Stanzpresse 48 besteht im wesentlichen aus einem oberen und einem unteren, durch eine Zwischenmatrize 51 getrennten Kanal 52, 53 zum Einlegen des oberen und des unteren Flachstabes 2, 49 des Drehkippbeschlages 50, einer Bodenmatrize 54, einem auf der Einlegeseite 55 der Stanzpresse 48 an der Zwischenmatrize 51 angeordneten Spreizkeil 56 für die zu bearbeitenden Flachstäbe 2, 49, einem Lochprägestempel 57 mit einer umlaufenden Schneidkante 58 und einem Ablängstempel 59 mit zwei parallelen Wechsel-Schneidkanten 60, 61, die 57, 59 in die Kolbenstange 6 des Arbeitskolbens 5 des Antriebszylinders eingebaut sind und deren Schneidkanten 58; 60, 61 mit entsprechenden Gegenschneidkanten 62, 63 der Zwischenmatrize 51 zusammenwirken, zum Lochen und Ablängen des freien Endes 2a des oberen Flachstabes 2 sowie einer quer zu den Einlegekanälen 52, 53 für die zu bearbeitenden Flachstäbe 2, 49 hinter dem Spreizkeil 56 angeordneten Stempelbrücke 64.

Die Stempelbrücke 64 ist an zwei an der Kolbenstange 6 des Arbeitskolbens 5 des Antriebszylinders 3 befestigten Haltestangen 65 angebracht und bildet mit diesen ein Fenster 66 zum Durchschieben der oberen Flachstange 2 beim Einlegen derselben in den oberen Kanal 52. Die Stempelbrücke 64 weist eine Schneidkante 67 zum Ablängen des unteren Doppelflachstabes 49 auf, die mit einer entsprechenden Gegenschneidkante 68 eines an der Bodenmatrize 54 befestigten Matrizenstempels 69 beim Ablängvorgang zusammenwirkt, wobei beim Arbeitshub a der Stanzpresse 48 die Stempelbrücke 64 durch die Zwischenmatrize 51 und den Matrizenstempel 69 der Bodenmatrize 54 geführt ist.

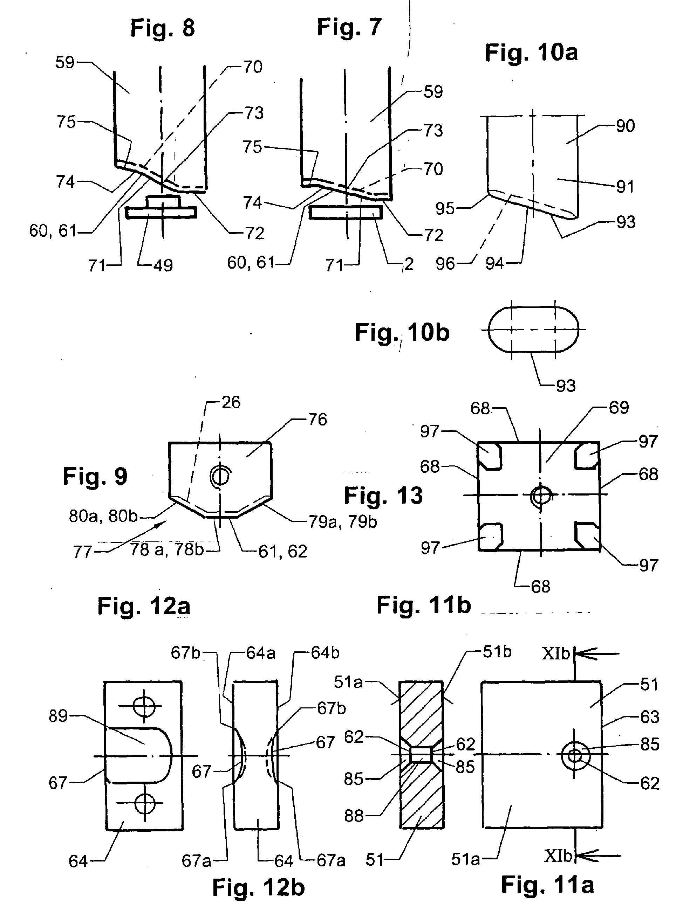

Der als Wechselstempel ausgebildete Ablängstempel 59 nach den Fign. 6 und 7 für einlagiges Flachstabmaterial 2 weist zwei durch eine Hohlform 70 gebildete, parallele Schneidkanten 60, 61 auf, die jeweils mit einer entsprechenden Gegenschneidkante 63 der Zwischenmatrize 51 zusammenwirken, wobei nach Verschleiß der einen Schneidkante 60 der Ablängstempel 59 in einer um seine Längsachse um 180° gedrehten Einbaustellung in der Kolbenstange 6 des Arbeitskolbens des Antriebszylinders mit der anderen unverbrauchten Schneidkante 61 weiterverwendbar ist.

Die beiden Schneidkanten 60, 61 des Ablängstempels 59 besitzen eine auf den Schnittkraftbedarf beim Ablängen des Flachstabmaterials 2 abgestimmte Kontur 71 mit drei stufenartig ansteigenden Schneidkantenabschnitten 72-74.

Die Kontur 71 der Schneidkantenabschnitte 72-74 des zum Ablängen von Doppelflachstabmaterial 49 vorgesehenen Ablängstempels 59 nach Fig. 8 hat eine größere Steigung als diejenige des Ablängstempels 59 nach Fig. 7.

Die Kontur 71 der Schneidkanten 60, 61 des Ablängstempels 59 ist auf den Schnittkraftbedarf des Flachstabmaterials 2, 49 derart abgestimmt, dass die Kraft und der Hub des Antriebszylinders der Stanzpresse voll ausgenutzt werden, wobei die optimale Kraftausnutzung und der sanfte Auslauf 75 der Schneidkantenkontur 71 das Abspringen von Abfallmaterial verhindern.

Die Schneidkanten 61, 62 des als Wechselstempel ausgebildeten Ablängstempels 76 nach Fig. 9 besitzen eine trapezförmige Kontur 77 mit je zwei Basisschneidkanten 78a, 78b und je zwei seitlichen schrägen Schneidflanken 79a, 79b; 80a, 80b sowie einer Hohlform 26. Die Schneidkantenkontur 77 ist derart gestaltet, dass zu Beginn des Schnittes die Basisschneidkante 78 in das abzulängende Material eintaucht und anschließend die Schneidflanken 79, 80. Auf diese Weise werden die Kanten des Schneidgutes heruntergezogen und verletzungssicher gerundet.

Der als Wechselstempel ausgebildete Lochprägestempel 57 der Stanzpresse 48 nach Fig. 6 besitzt zwei Präge- und Stanzenden 81, 82 mit je einem Prägekonus 83 und einer umlaufenden Schneidkante 58 mit einer Hohlform 84, die mit einer konischen Ansenkung 85 und einer umlaufenden Gegenschneidkante 62 der Zwischenmatrize 51 zusammenwirken, wobei nach Verschleiß der Schneidkante 58 des einen Präge- und Stanzendes 81 der Lochprägestempel 57 in einer um seine Querachse um 180° gedrehten Einbaustellung in der Kolbenstange 6 des Arbeitskolbens des Antriebszylinders mit der unverbrauchten Schneidkante 58 des anderen Präge- und Stanzendes 82 weiterverwendbar ist.

Der in den Fign. 10a und 10b dargestellte, als Wechselstempel ausgebildete Lochstempel 90 zum Stanzen von Langlöchern besitzt ein Stanzende 91 mit einer ovalen Lochschneidkante 93 mit einer schrägen Kontur 94, einem neutralen sanften Auslauf 95 und einer Hohlform 96.

Lochprägestempel 57 und Ablängstempel 59 der Stanzpresse 48 sind durch eine gemeinsame Befestigungsschraube 86 in der Kolbenstange 6 des Arbeitskolbens 5 des Antriebszylinders 3 gehalten.

Die in den Fign. 6, 11a und 11b dargestellte Zwischenmatrize 51, die durch eine Klemmplatte 87 der Bodenmatrize 54 festgeklemmt ist, ist als Wechselmatrize mit auf beiden Seiten 51a, 51b gegenüberliegend angeordneten Ansenkungen 85 sowie umlaufenden Lochgegenschneidkanten 62 an den Enden eines Durchgangsloches 88 und auf beiden Seiten 51a, 51b angeordneten, quer zu den Einlegekanälen 52, 53 für das Flachstabmaterial 2, 49 verlaufenden Gegenschneidkanten 63 ausgebildet, die mit den Schneidkanten 58; 60, 61 des Lochprägestempels 57 und des Ablängstempels 59 in der Kolbenstange des Arbeitskolbens des Antriebszylinders beim Lochen und Ablängen des eines Endes 2a des oberen Flachstabes 2 eines Drehkippbeschlages 50 zusammenwirken, wobei nach dem Verschleiß der einen Gegenschneidkanten 62, 63 durch einen Einbau der Zwischenmatrize 51 in einer um deren Längsachse um 180° gedrehten Stellung die unverbrauchten anderen Gegenschneidkanten 62, 63 für den weiteren Betrieb der Stanzpresse 48 einsatzbereit sind.

Die Stempelbrücke 64 nach den Fign. 6, 12a und 12b weist zwei auf beiden Seiten 64a, 64b angeordnete konkave Schneidkanten 67 auf, wobei nach dem Verschleiß der einen Schneidkante 67 die unverbrauchte andere Schneidkante 67 der Stempelbrücke 64 in einer um 180° um deren Längsachse gedrehten Einbaustellung zum Einsatz kommt.

Aufgrund der konkaven Kontur der Schneidkanten 67 wird der zu trennende Doppelflachstab 49 zuerst mit den Schneidkantenrändern 67a, 67b angeschnitten und erst wenn ungefähr 50% des Schneidwiderstandes des Doppelflachstabes 49 gebrochen ist, wird die Restschnittarbeit vom Grund der Schneidkante 67 geleistet.

Die beidseitigen konkaven Schneidkanten 67 der Stempelbrücke 64 bilden zusammen mit anschließenden Hohlschliffen 89, die sich in Richtung der beiden Einlegekanäle 52, 53 erstrecken, eine Verlängerung des Spreizkeiles 56, die gegenüber dem Spreizkeil verjüngt ist. Diese Oberflächengeometrie der Stempelbrücke 64 in Verbindung mit dem Spreizkeil 56 ermöglicht ein einfaches Einlegen der Flachstäbe 2, 49 des Drehkippbeschlages 50 in die Kanäle 52, 53 der Stanzpresse 48, eine geringe Spreizung der Flachstäbe 2, 49 und einen weichen Schnitt beim Lochen und Ablängen des freien Endes 2a des oberen Flachstabes 2. Beim Ablängen wird zunächst das Abfallmaterial der Enden 2a, 49a der beiden Flachstäbe 2, 49 leicht gebogen und anschließend erfolgt der Schnitt.

Der mit der Schneidkante 67 der Stempelbrücke 64 beim Ablängen des freien Endes 49a des unteren Doppelflachstabes 49 des Drehkippbeschlages 50 zusammenwirkende Matrizenstempel 69 der Bodenmatrize 54 gemäß Fig. 13 weist vier Gegenschneidkanten 68 auf, die bei Verschleiß einer Schneidkante nacheinander durch eine zentrale Befestigung des Matrizenstempels 69 in einer um dessen Mittelachse jeweils um 90° gedrehten Einbaustellung an der Bodenmatrize 54 in die Betriebsstellung gebracht werden, sowie vier Führungsstifte 97 als Montagehilfe für die Stempelbrücke 64.

Zum Ablängen der freien Enden 2a, 49a des einfachen Flachstabes 2 und des Doppelflachstabes 49 eines Drehkippbeschlages 50 und Lochen des freien Endes 2a des einfachen Flachstabes 2 mittels der in Fig. 6 dargestellten Stanzpresse 48 werden die Flachstäbe 2, 49 beim Einführen in die Einlegekanäle 52, 53 der Stanzpresse durch den Spreizkeil 56 der Zwischenmatrize 51 gespreizt. Der einfache Flachstab 2 wird durch das Fenster 66, das durch die beiden Haltestangen 65 und die Stempelbrücke 64 gebildet wird, durchgeschoben, so dass im Bereich des Fensters 66 kein Schnitt an dem in dem Kanal 52 liegenden Flachstab erfolgt. Die beiden Flachstäbe 2, 49 werden in den beiden Kanälen 52, 53 so weit vorgeschoben, bis das freie Ende 2a des einfachen Flachstabes 2 über die Gegenschneidkante 63 der Zwischenmatrize 51 und das freie Ende 49a des Doppelflachstabes 49 über die Gegenschneidkante 68 des an der Bodenmatrize 54 befestigten Matrizenstempels 69 hinausragt. Beim Stanzvorgang werden die Stempelbrücke 64, der Lochprägestempel 57 und der Ablängstempel 59, die mit der Kolbenstange 6 des Arbeitskolbens 6 des Antriebszylinders 3 fest verbunden sind, gleichzeitig in Pfeilrichtung a derart auf die beiden Flachstäbe 2, 49 zu bewegt, dass zuerst das freie Ende 49a des Doppelflachstabes 49 im unteren Einlegekanal 53 abgelängt wird, anschließend der Lochprägestempel 57 das freie Ende 2a des in den oberen Einlegekanal 52 eingeschobenen Flachstabes 2 anstanzt und danach ein Loch aus dem freien Ende 2a des Flachstabes 2 mit dem Lochprägestempel 57 ausgestanzt und eine Ansenkung über dem Loch in das freie Ende 2a des Flachstabes 2 eingeprägt und gleichzeitig mit dem Ablängstempel 59 das freie Ende 2a des Flachstabes abgelängt wird.

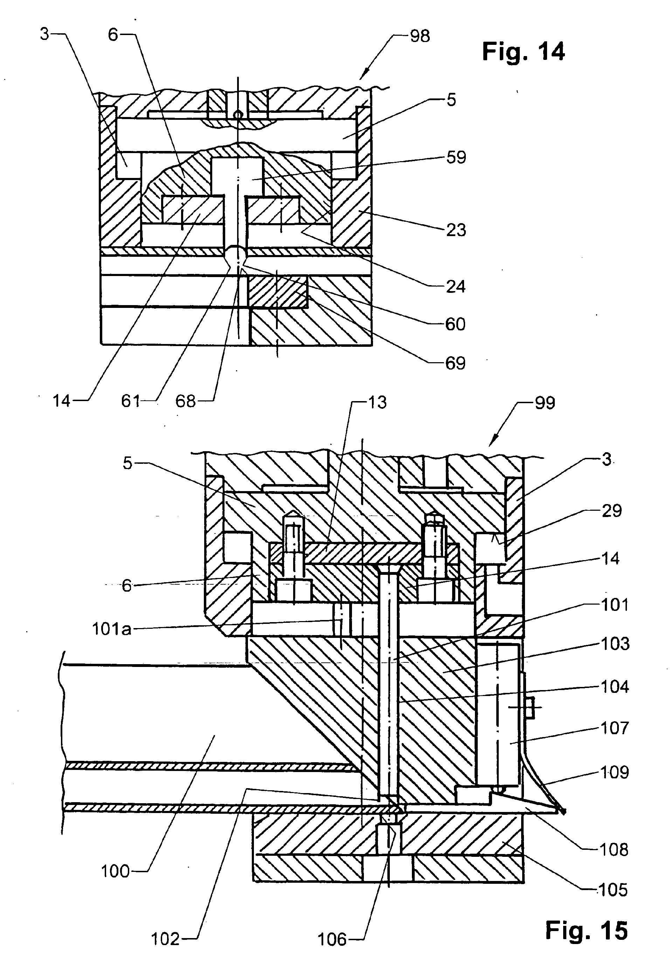

Die Stanzpresse 98 nach Figur 14 zum Ablängen von Flachstabmaterial im Einzel- und Paketschnitt ist mit einem Antriebszylinder 3, einem Ablängstempel 59 mit den Schneidkanten 60,61, der in der Kolbenstange 6 des Arbeitskolbens 5 mittels einer Spannplatte 14 gehalten ist, einem Ringflansch 23 mit einer Zylinderführung 24 für die Kolbenstange 6 und einem Matrizenstempel 69 mit einer Gegenschneidkante 68 ausgerüstet.

Die in Figur 15 dargestellte Stanzpresse 99 zum Lochen von auf Gehrung geschnittenen Aluminiumfensterprofilen 100 besteht im wesentlichen aus einem Antriebszylinder 3, einem Lochstempel 101 mit einer Lochschneidkante 102 sowie einem weiteren Lochstempel 101a, die mittels einer Lagerplatte 13 und einer Spannplatte 14 in der Kolbenstange 6 des Arbeitskolbens 5 des Antriebszylinders 3 befestigt sind, einem Einbauteil 103 mit einer Zylinderführung 104 für die Lochstempel 101 und 101a, einer Matrize 105 mit einer Lochgegenschneidkante 106, einem Zwischenschalter 107 zur Betätigung eines Steuerventils für den Antriebszylinder 3 der Stanzpresse, einem Schieber 108 zur Betätigung des Zwischenschalters 107 sowie einer Rückstellfeder 109 für den Schieber 108.

### Die Lochstanzpresse arbeitet wie folgt:

Das Profil 100 wird bis zu einem Anschlag beziehungsweise Einschiebepunkt in die Stanzpresse 99 eingeschoben, wobei zum Ende des Einschiebeweges der Schieber 108 durch das Profil gegen den Zwischenschalter 107 geschoben wird, der das mit einem Hand- oder Fußschalter ausgelöste Steuersignal zur Einleitung des Stanzvorganges durchläßt. Wenn nach dem Stanzvorgang das Steuersignal zurückgeführt wird, wird der Arbeitskolben 5 mit den Lochstempeln 101 und 101a durch das auf die stangenseitige Ringfläche 29 des Arbeitskolbens 5 des Antriebszylinders 3 wirkende Druckmedium zurückgestellt, so dass das Profil 100 der Stanzpresse 99 entnommen werden kann. Gleichzeitig wird der Zwischenschalter 107 durch die Rückstellfeder 109 in seine Ausgangsstellung zurückgeschoben und das Steuersignal unterbrochen. Eine Betätigung des Hand- oder Fußschalters ohne eingelegtes Werkstück löst kein Steuersignal zur Einleitung des Stanzvorganges aus.

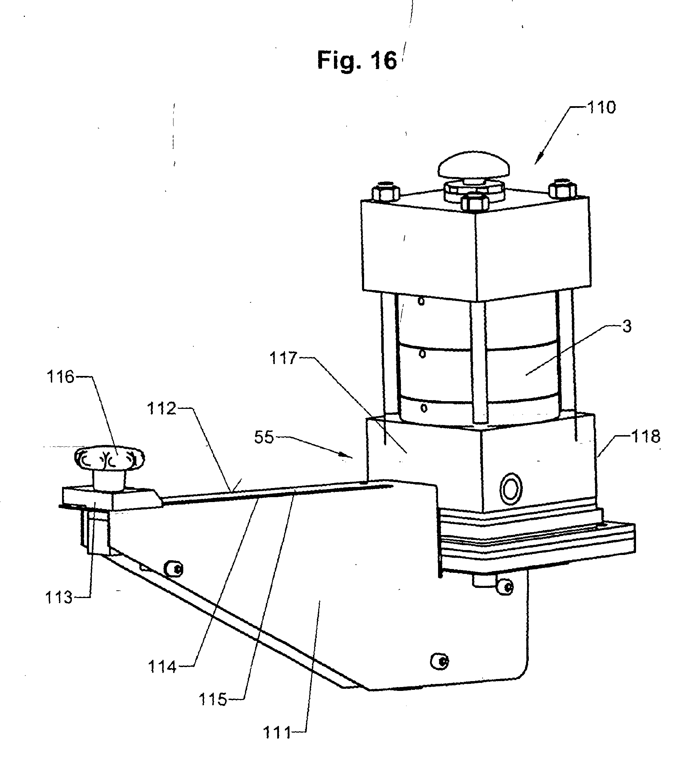

Figur 16 zeigt eine Stanzpresse 110 zum Beispiel zum Ablängen und Lochen der Enden von Flachstäben von Drehkippbeschlägen für Fenster mit einem Antriebszylinder 3 und einem auf der Einlegeseite 55 für das Stanzgut angebrachten Schutzgehäuse 111, das sich in Richtung des Einlegekanals beziehungsweise der Einlegekanäle für das Stanzgut erstreckt. Das Schutzgehäuse 111 ist als Träger für eine Messskala 112 und einen Messschieber 113 ausgestattet, der in einem Schlitz 114 in der Oberseite 115 des Schutzgehäuses 111 verschiebbar geführt ist und eine Klemm- und Betätigungsschraube 116 für das Stanzgut aufweist. Die Anordnung der Klemm- und Befestigungsschraube 116 ist derart gestaltet und die Zahlen der Messskala sind in einer zur Ausgangsposition der Messskala um 180° gedrehten Position lesbar, so dass das Schutzgehäuse 111 mit dem Messschieber 113 auf den beiden gegenüberliegenden Seiten 117,118 der Stanzpresse 110 angebracht werden kann, an denen der Einlegekanal beziehungsweise die Einlegekanäle für das Stanzgut endet beziehungsweise enden. Der Messschieber 113 kann beispielsweise zur Längenmessung von Abfallmaterial bei der Ablängung eines Endes von Flachstabmaterial für Fensterbeschläge verwendet werden.

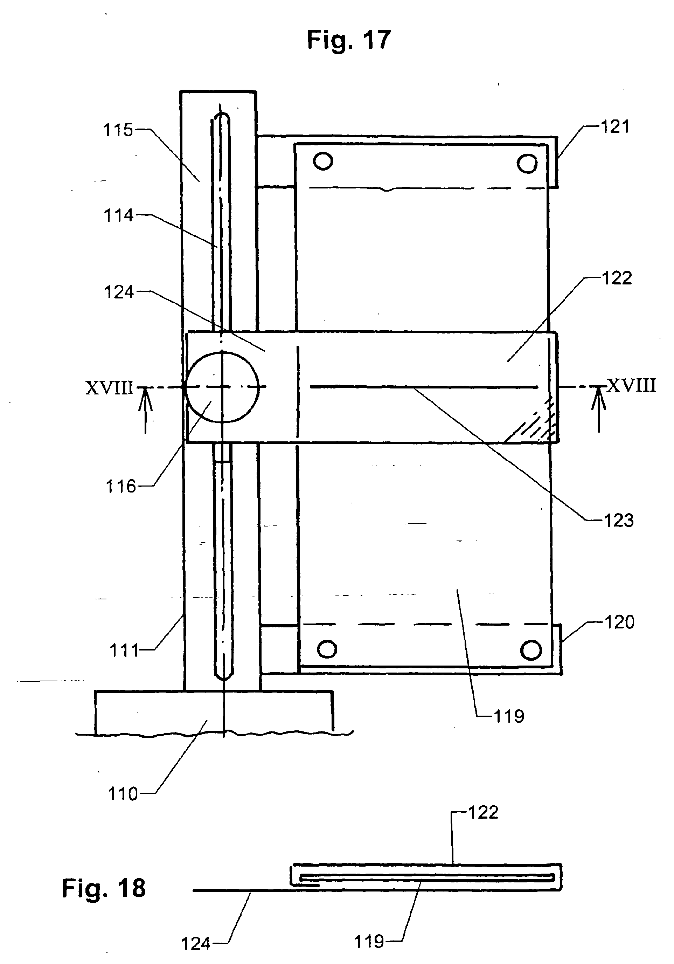

Der in den Figuren 17 und 18 gezeigte Tabellenschieber 119 für die Messung des beim Ablängen von Flachstäben beispielsweise von Drehkippbeschlägen für Fenster anfallenden Abfallmaterials ist auf zwei Konsolen 120,121 befestigt, die an dem Schutzgehäuse 111 der Stanzpresse 110 gemäß Figur 16 angebracht sind, und kann justiert werden. Ein durchsichtiger Schieber 122 mit einer Ableselinie 123, der den Tabellenschieber 119 umfasst, weist eine Verlängerung 124 auf, die mit einem nicht dargestellten Anschlag für das zu bearbeitende, in dem Schutzgehäuse 111 geführte Flachstabmaterial eines Beschlages verbunden ist. Der durchsichtige Schieber 122 ist mittels der Betätigungs- und Klemmschraube 116, die in dem Schlitz 114 in der Oberseite 115 des Schutzgehäuses 111 verstellbar geführt ist, über dem Tabellenschieber 119 verschiebbar und festklemmbar.

## Patentansprüche

1. Stanzpresse, insbesondere zur Ablängung und Endenbearbeitung von Flachstabmaterial für Fensterbeschläge, mit einem druckmittelbetätigten Antriebszylinder für den Hubantrieb eines Werkzeughalters mit einem eingebauten Stanzwerkzeug, das mit einer Matrize zusammenwirkt, wobei die Kolbenstange des doppeltwirkenden Arbeitskolbens des Antriebszylinders als Werkzeughalter für den Einbau eines Stanzwerkzeugs ausgebildet ist und die Kolbenstange beim Arbeitshub und beim Rückhub des Arbeitskolbens durch eine Zylinderführung des Mantels des Antriebszylinders, den Arbeitskolben des Antriebszylinders sowie einen an der der Kolbenstange abgewandten Fläche des Arbeitskolbens angeordneten Führungsbolzen, der im Boden des Antriebszylinders verschiebbar gelagert ist, geführt ist, **gekennzeichnet durch** einen oberen und einen unteren **durch** eine Zwischenmatrize (51) getrennten Kanal (52,53) zum Einlegen eines oberen und eines unteren Flachstabes (2,49) eines Fensterbeschlages (50), die an einem Ende miteinander verbunden sind, eine Bodenmatrize (54), einen auf der Einlegeseite (55) der Stanzpresse (48) an der Zwischenmatrize (51) angeordneten Spreizkeil (56) für die zu bearbeitenden Flachstäbe (2,49), mindestens einen Lochstempel oder Lochprägestempel (57) mit einer umlaufenden Schneidkante (58) und einen Ablängstempel (59) mit mindestens einer Schneidkante (60), die (57,59) in die Kolbenstange (6) des Arbeitskolbens (5) des Antriebszylinders (3) eingebaut sind und deren Schneidkanten (58;60,61) mit entsprechenden Gegenschneidkanten (62,63) der Zwischenmatrize (51) zusammenwirken, zum Lochen und Ablängen des einen Endes (2a) des oberen Flachstabes (2) sowie eine quer zu den Einlegekanälen (52,53) für die zu bearbeitenden Flachstäbe (2,49) hinter dem Spreizkeil (56) angeordnete Stempelbrücke (64), die an zwei an der Kolbenstange (6) des Antriebszylinders (3) befestigten Haltestangen (65) angebracht ist und mit diesen ein Fenster (66) zum Durchschieben des oberen Flachstabes (2) beim Einlegen desselben in den oberen Kanal (52) bildet, wobei die Stempelbrücke (64) mindestens eine Schneidkante (67) zum Ablängen des unteren Flachstabes (49) aufweist, die mit einer entsprechenden Gegenschneidkante (68) eines an der Bodenmatrize (54) befestigten Matrizenstempels (69) beim Ablängvorgang zusammenwirkt, und wobei beim Arbeitshub (a) der Stanzpresse (48) die Stempelbrücke (64) **durch** die Zwischenmatrize (51) und den Matrizenstempel (69) der Bodenmatrize (54) geführt wird.

2. Stanzpresse nach Anspruch 1, **dadurch gekennzeichnet, dass** die Stanzwerkzeuge (51,57,59,64,69) als Wechselwerkzeuge mit Ersatzschneidkanten ausgebildet sind.

3. Stanzpresse nach Anspruch 1 und 2, **dadurch gekennzeichnet, dass** die Zwischenmatrize (51) durch eine Klemmplatte (87) der Bodenmatrize (54) festgeklemmt wird.

4. Stanzpresse nach einem der Ansprüche 1 bis 3, **dadurch gekennzeichnet, dass** die Stempelbrücke (64) zwei auf beiden Seiten (64a, 64b) angeordnete konkave Schneidkanten (67) aufweist, wobei nach dem Verschleiß der einen Schneidkante (67) die unverbrauchte andere Schneidkante (67) der Stempelbrücke (64) in einer um 180° um deren Längsachse gedrehten Einbaustellung zum Einsatz kommt.

5. Stanzpresse nach Anspruch 4, **dadurch gekennzeichnet, dass** die beidseitigen konkaven Schneidkanten (67) der Stempelbrücke (64) zusammen mit anschließenden beidseitigen Hohlschliffen (89), die sich in Richtung der beiden Einlegekanäle (52, 53) erstrecken, eine Verlängerung des Spreizkeiles (56) bilden, die gegenüber dem Spreizkeil verjüngt ist.

6. Stanzpresse nach einem der Ansprüche 1 bis 5, **gekennzeichnet durch** eine Ausbildung der Zwischenmatrize (51) als Wechselmatrize mit auf beiden Seiten (51a, 51b) der Matrize gegenüberliegend angeordneten Ansenkungen (85) sowie umlaufenden Lochgegenschneidkanten (62) an den Enden eines Durchgangsloches (88) und auf beiden Seiten (51a, 51b) der Zwischenmatrize (51) angeordneten, quer zu den Einlegekanälen (52, 53) für das Flachstabmaterial (2, 49) verlaufenden-Gegenschneidkanten (63), die mit den Schneidkanten (58; 61, 62) eines Lochstempels oder Lochprägestempels (57) und eines Ablängstempels (59) in der Kolbenstange (6) des Arbeitskolbens (5) des Antriebszylinders (3) beim Lochen und Ablängen eines Endes (2a) des oberen Flachstabes (2) zusammenwirken, wobei nach dem Verschleiß der einen Gegenschneidkanten (62, 63) **durch** einen Einbau der Zwischenmatrize (51) in einer um deren Längsachse um 180° gedrehten Stellung die unverbrauchten anderen Gegenschneidkanten (62, 63) für den weiteren Betrieb der Stanzpresse (48) einsatzbereit sind.

7. Stanzpresse nach einem der Ansprüche 1 bis 6, **dadurch gekennzeichnet, dass** Lochstempel oder Lochprägestempel (57) und Ablängstempel (59) durch eine gemeinsame Befestigungsschraube (86) in der Kolbenstange (6) des Arbeitskolbens (5) des Antriebszylinders (3) gehalten sind.

8. Stanzpresse nach einem der Ansprüche 1 bis 7, **dadurch gekennzeichnet, dass** der mit der Schneidkante (67) der Stempelbrücke (64) beim Ablängen eines Endes (49a) des unteren Flachstabes (49) eines Fensterbeschlages (50) zusammenwirkende Matrizenstempel (69) der Bodenmatrize (54) vier Gegenschneidkanten (68) aufweist, die bei Verschleiß einer Schneidkante nacheinander durch eine zentrale Befestigung des Matrizenstempels (69) in einer um dessen Mittelachse jeweils um 90° gedrehten Einbaustellung an der Bodenmatrize (54) in die Betriebsstellung gebracht werden, sowie vier Führungsstifte (97) als Montagehilfe und Führung für die Stempelbrücke (64).

9. Stanzpresse nach einem der Ansprüche 1 bis 8, **gekennzeichnet durch** einen Antrieb der Presse (1) mittels eines doppeltwirkenden Pneumatik- oder Hydraulikzylinders (3), eines Tandem-Pneumatikzylinders, eines Reihenpneumatikzylinders, eines Hydropneumatik-Kurzhubzylinders mit einfachem oder Tandem-Druckübersetzer oder mittels eines Hydropneumatik-Eilhubzylinders.

10. Stanzpresse nach einem der Ansprüche 1 bis 9, **gekennzeichnet durch** ein auf der Einlegeseite (55) der Stanzpresse (110) für das Stanzgut angebrachtes Schutzgehäuse (111), das sich in Richtung des Einlegekanals (52) beziehungsweise der Einlegekanäle (52,53) erstreckt und das als Träger für eine Messskala (112) und einen Messschieber (113) oder einen Tabellenschieber (119) beispielsweise zur Längenmessung von Abfallmaterial bei der Ablängung eines Endes von Flachstabmaterial für Fensterbeschläge dient.

11. Stanzpresse nach Anspruch 10, **dadurch gekennzeichnet, dass** der Tabellenschieber (119) eine Verlängerung (124) aufweist, die fest mit einem verschiebbaren Anschlag für das Stanzgut verbunden ist.

## Claims

1. Punching press, in particular for cutting to length and machining the ends of flat bar material for window fittings, with a pressure medium-operated drive cylinder for the lifting drive of a tool holder with an installed punching tool, which cooperates with a die, wherein the piston rod of the double-action main piston of the drive cylinder is configured as a tool holder for the installation of a punching tool and during the working stroke and return stroke of the main piston, the piston rod is directed by a cylinder guide of the shell of the drive cylinder, the main piston of the drive cylinder and also a guide bolt, which is arranged on the surface of the main piston remote from the piston rod and is displaceably mounted in the base of the drive cylinder, **characterised by** an upper and a lower channel (52, 53) separated by an intermediate die (51) for inserting an upper and a lower flat bar (2, 49) of a window fitting (50), which are connected to one another at one end, a base die (54), a spreading block (56) arranged on the intermediate die (51) on the insertion side (55) of the punching press (48) for the flat bars (2, 49) to be machined, at least one hole punch or embossing punch (57) with a circumferential cutting edge (58) and a sectioning punch (59) with at least one cutting edge (60), which (57, 59) are installed in the piston rod (6) of the main piston (5) of the drive cylinder (3) and their cutting edges (58; 60, 61) cooperate with corresponding counter cutting edges (62, 63) of the intermediate die (51) to perforate and cut to length one end (2a) of the upper flat bar (2), and also a punch bridge (64), which is arranged behind the spreading block (56) transversely to the insertion channels (52, 53) for the flat bars (2, 49) to be machined and which is attached to two holding rods (65) fastened to the piston rod (6) of the drive cylinder (3) and with these forms a window (66) for pushing the upper flat bar (2) through when this is inserted into the upper channel (52), wherein the punch bridge (64) has at least one cutting edge (67) for cutting to length the lower flat bar (49) that cooperates with a corresponding counter cutting edge (68) of a die punch (69) fastened to the base die (54) during the sectioning process, and wherein during the working stroke (a) of the punching press (48) the punch bridge (64) is guided via the intermediate die (51) and the die punch (69) of the base die (54).

2. Punching press according to claim 1, **characterised in that** the punching tools (51, 57, 59, 64, 69) are configured as removable tools with replaceable cutting edges.

3. Punching press according to claim 1 or 2, **characterised in that** the intermediate die (51) is firmly clamped by a clamping plate (87) of the base die (54).

4. Punching press according to one of claims 1 to 3, **characterised in that** the punch bridge (64) has two concave cutting edges (67) arranged on both sides (64a, 64b), wherein after one cutting edge (67) has worn, the unused other cutting edge (67) of the punch bridge (64) comes into use in an installation position rotated 180° around the longitudinal axis thereof.

5. Punching press according to claim 4, **characterised in that** the concave cutting edges (67) on both sides of the punch bridge (64) together with adjoining negative crowns (89) on both sides, which extend in the direction of the two insertion channels (52, 53), form an extension of the spreading block (56) that is tapered relative to the spreading block.

6. Punching press according to one of claims 1 to 5, **characterised by** a configuration of the intermediate die (51) as replaceable die with countersunk areas (85) arranged on both sides (5 1 a, 51 b) opposite the die and circumferential counter hole cutting edges (62) at the ends of a through-hole (88) and counter cutting edges (63), which are arranged on both sides (51 a, 51 b) of the intermediate die (51) and run transversely to the insertion channels (52, 53) for the flat bar material (2, 49) and which cooperate with the cutting edges (58; 61, 62) of a hole punch or embossing punch (57) and a sectioning punch (59) in the piston rod (6) of the main piston (5) of the drive cylinder (3) during perforation and sectioning of an end (2a) of the upper flat bar (2), wherein after one of the cutting edges (62, 63) has worn, the unused other counter cutting edges (62, 63) are ready for use for further operation of the punching press (48) as a result of an installation of the intermediate die (51) in a position rotated 180° around the longitudinal axis thereof.

7. Punching press according to one of claims 1 to 6, **characterised in that** the hole punch or embossing punch (57) and sectioning punch (59) are held in the piston rod (6) of the main piston (5) of the drive cylinder (3) by a common fastening screw (86).

8. Punching press according to one of claims 1 to 7, **characterised in that** the die punch (69) of the base die (54) cooperating with the cutting edge (67) of the punch bridge (64) during sectioning of an end (49a) of the lower flat bar (49) of a window fitting (50) has four counter cutting edges (68), which when one cutting edge becomes worn are brought consecutively into the operating position as a result of a central fastening of the die punch (69) in an installation position on the base die (54) respectively rotated 180° around the centre axis of said die punch, as well as four guide pins (97) as mounting aid and guide for the punch bridge (64).

9. Punching press according to one of claims 1 to 8, **characterised by** a drive of the press (1) by means of a double-action pneumatic or hydraulic cylinder (3), a tandem pneumatic cylinder, a series pneumatic cylinder, a hydro-pneumatic short-stroke cylinder with single or tandem booster or by means of a hydro-pneumatic rapid-stroke cylinder.

10. Punching press according to one of claims 1 to 9, **characterised by** a protective housing (111), which is attached on the insertion side (55) of the punching press (110) for the punched material and which extends in the direction of the insertion channel (52) or insertion channels (52, 53) and serves as support for a measuring scale (112) and a vernier (113) or a tabular slide (119), for example, for length measurement of waste material when cutting to length an end of flat bar material for window fittings.

11. Punching press according to claim 10, **characterised in that** the tabular slide (119) has an extension (124), which is fixedly connected to a displaceable stop for the punched material.

## Revendications

1. Presse de découpage, notamment pour la mise à longueur et pour finir l'extrémité de baguettes plates de ferrures de fenêtre, comprenant un vérin d'entraînement actionné par du fluide sous pression pour la course d'un porte-outil ayant un outil de poinçonnage incorporé, qui coopère avec une matrice, la tige du piston de travail à double effet du vérin d'entraînement étant constituée en porte-outil pour le montage d'un outil de poinçonnage et la tige du piston étant guidée, lors de la course de travail et lors de la course de retour du piston de travail, par un guidage de la surface latérale du vérin d'entraînement, par le piston de travail du vérin d'entraînement, ainsi que par des axes de guidage et qui sont disposés sur la surface du piston de travail, éloignée de la tige de piston, qui est monté coulissant dans le fond du vérin d'entraînement, **caractérisée par** un canal (52) supérieur et un canal (53) inférieur séparés par une matrice (51) intermédiaire pour l'introduction d'une baguette (2) plate supérieure et d'une baguette (49) plate inférieure d'une ferrure (50) de fenêtre, qui communiquent entre eux à une extrémité, par une matrice (54) de fond, par un coin (56) d'écartement des baguettes (2, 49) plates à finir disposé du côté (55) d'introduction de la presse (48) de découpage sur la matrice (51) intermédiaire, par au moins un poinçon ou un poinçon (57) d'estampage de trou ayant un bord (58) de coupe faisant le tour et un poinçon (59) de mise à longueur ayant au moins un bord (60) de coupe, qui (57, 59) sont montés dans la tige (6) du piston (5) de travail du vérin (3) d'entraînement et dont les bords (58, 60, 61) de coupe coopèrent avec des bords (62, 63) de coupe antagonistes correspondants de la matrice (51) intermédiaire, pour poinçonner et mettre à longueur l'une des extrémités (2a) de la baguette (2) plate supérieure, ainsi qu'un pont (64) de poinçon, disposé transversalement aux canaux (52, 53) d'introduction des baguettes (2, 49) plates à finir derrière le coin (56) d'écartement, mis sur deux barres (65) de maintien fixées à la tige (6) de piston du vérin (3) d'entraînement et formant avec celles-ci une fenêtre (66) pour le passage de la baguette (2) plate supérieure lors de l'introduction de celle-ci dans le canal (52) supérieur, le pont (64) de poinçon ayant au moins un bord (67) de coupe pour mettre à longueur la baguette (49) plate inférieure, qui coopère avec un bord (68) de coupe antagoniste correspondant d'un poinçon (69) de matrice fixé à la matrice (54) de fond lors de la mise à longueur et dans lequel, lors de la course (a) de la presse (48) de découpage, le pont (64) de poinçon est guidé par la matrice (51) intermédiaire et par le poinçon (69) de la matrice (54) de fond.

2. Presse de découpage suivant la revendication 1, **caractérisée en ce que** les outils (51, 57, 59, 64, 69) de poinçonnage sont constitués en outils pouvant être remplacés ayant des bords de coupe de rechange.

3. Presse de découpage suivant la revendication 1 et 2, **caractérisée en ce que** la matrice (51) intermédiaire est serrée par une plaque (87) de serrage de la matrice (54) de fond.

4. Presse de découpage suivant l'une des revendications 1 à 3, **caractérisée en ce que** le pont (64) de poinçon a deux bords (67) de coupe concaves, disposés des deux côtés, dans laquelle, après l'usure de l'un des bords (67) de coupe, l'autre bord (67) de coupe inutilisé du pont (64) de poinçon vient en utilisation en une position de montage tourné de 180° autour de son axe longitudinal.

5. Presse de découpage suivant la revendication 4, **caractérisée en ce que** les bords (67) de coupe concaves des deux côtés du pont (64) de poinçon forment, ensemble avec des pièces (89) polies creuses se raccordant des deux côtés et s'étendant dans la direction des deux canaux (52, 53) d'introduction, un prolongement du coin (56) d'écartement, qui se rétrécit par rapport au coin d'écartement.

6. Presse de découpage suivant l'une des revendications 1 à 5, **caractérisée par** une constitution de la matrice (51) intermédiaire en matrice remplaçable ayant des chanfreins (85) disposés de manière opposée des deux côtés (51a, 51b) de la matrice, ainsi que des bords (62) de coupe antagonistes faisant le tour aux extrémités d'un trou (86) de passage et des bords (63) de coupe antagonistes disposés des deux côtés (51a, 51b) de la matrice (51) intermédiaire, s'étendant transversalement aux canaux (52, 53) d'introduction de la baguette (2, 49) plate et coopérant avec les bords (58, 61, 62) de coupe d'un poinçon ou d'un poinçon (57) d'estampage de trou et d'un poinçon (59) de mise à longueur dans la tige (6) du piston (5) de travail du vérin (3) d'entraînement lors de la perforation et de la mise à longueur d'une extrémité (2a) de la baguette (2) plate supérieure, dans laquelle, après l'usure de l'un des bords (62, 63) de coupe antagonistes, les autres bords (62, 63) de coupe antagonistes inutilisés sont mis en utilisation pour le fonctionnement ultérieur de la presse (48) de découpage par montage de la matrice (51) intermédiaire en une position tournée de 180° autour de son axe longitudinal.

7. Presse de découpage suivant l'une des revendications 1 à 6, **caractérisée en ce que** le poinçon ou le poinçon (57) de d'estampage de trou et le poinçon (59) de mise à longueur sont maintenus par une vis (86) commune de fixation dans la tige (6) du piston (5) de travail du vérin (3) d'entraînement.

8. Presse de découpage suivant l'une des revendications 1 à 7, **caractérisée en ce que** le poinçon (69) de la matrice (54) de fond, coopérant avec le bord (67) de coupe du pont (64) de poinçon lors de la mise à longueur d'une extrémité (49a) de la baguette (49) plate inférieure d'une ferrure (50) de fenêtre, a quatre bords (68) de coupe antagonistes qui, lors de l'usure d'un bord de coupe, sont mis en la position de fonctionnement sur la matrice (54) de fond l'un après l'autre par une fixation centrale du poinçon (69) de matrice en une position de montage tournée respectivement de 90° par rapport à son axe médian, ainsi que quatre broches (97) de guidage en tant qu'aide au montage et que guidage du pont (64) de poinçon.

9. Presse de découpage suivant l'une des revendications 1 à 8, **caractérisée par** un entraînement de la presse (1) au moyen d'un vérin (9) pneumatique ou hydraulique à double effet, au moyen d'un vérin pneumatique tandem, au moyen d'un vérin pneumatique série, au moyen d'un vérin hydropneumatique à course courte, ayant un multiplicateur de pression simple ou tandem, ou au moyen d'un vérin hydropneumatique à course rapide.

10. Presse de découpage suivant l'une des revendications 1 à 9, **caractérisée par** une enveloppe (111) de protection mise du côté (55) d'introduction du produit à découper de la presse (110) de découpage, enveloppe qui s'étend dans la direction du canal (52) d'introduction ou des canaux (52, 53) d'introduction et qui sert de support à une échelle (112) de mesure et à un coulisseau (113) de mesure ou à un coulisseau (119) de tabulation, par exemple pour la mesure de la longueur de chute lors de la mise à longueur d'une extrémité d'une baguette plate pour des ferrures de fenêtre.

11. Presse de découpage suivant la revendication 10, **caractérisée en ce que** le coulisseau (119) de tabulation a un prolongement (124) qui est relié de manière fixe à une butée coulissante pour le produit à découper.
